# EUROPEAN PATENT SPECIFICATION

(11) **EP 1 326 130 B1**
(45) Date of publication and mention of the grant of the patent: **14.02.2007**
(21) Application number: 02259010.3
(22) Date of filing: 30.12.2002
(51) Int. Cl.: G02F 1/1335, G02F 1/1333, G02F 1/1368

(54) **Liquid crystal display apparatus**
Flüssigkristallanzeigegerät
Dispostif d'affichage à cristaux liquides

(30) Priority: 28.12.2001 JP 2001401051
(43) Date of publication of application: 09.07.2003
(73) Proprietor: SANYO ELECTRIC CO., LTD., Moriguchi-shi, Osaka 570 (JP)
(72) Inventor: Inoue, Kazuhiro, Motosu-gun, Gifu (JP); Koma, Norio, Motosu-gun, Gifu (JP); Ogawa, Shinji, Ohgaki-shi, Gifu (JP); Yamashita, Tohru, Anpachi-gun, Gifu (JP); Oda, Nobuhiko, Hashima-shi, Gifu (JP); Ishida, Satoshi, Ohgaki-shi, Gifu (JP); Yamada, Tsutomu, Motosu-gun, Gifu (JP)
(74) Representative: Cross, Rupert Edward Blount

(56) References cited:
- EP-A- 1 122 585
- WO-A-00/05621
- US-A- 5 764 324
- US-A1- 2001 020 991
- US-A1- 2001 052 948
- PATENT ABSTRACTS OF JAPAN vol. 2002, no. 03, 3 April 2002 (2002-04-03) & JP 2001 312253 A (SHARP CORP), 9 November 2001 (2001-11-09)

## Description

### BACKGROUND OF THE INVENTION

### 1. Field of the Invention

The present invention relates to a transflective liquid crystal display apparatus wherein both a reflective region and a transmissive region are provided in each pixel.

### 2. Description of the Related Art

Liquid crystal display apparatuses (hereinafter referred to as "LCDs") are advantageous in that they are thin and consume relatively little power, and have been widely used for computer monitors and monitors for portable information devices or the like. In LCDs, liquid crystal is sealed between a pair of substrates each having an electrode formed thereon, and the orientation of the liquid crystal disposed between these electrodes is controlled by these electrodes to thereby achieve display. Contrary to CRT (Cathode Ray Tube) displays, electroluminescence (hereinafter referred to as "EL") displays or the like, LCDs require a light source in order to display an image for viewer observation, because LCDs are not, in principle, self-emissive.

Transmissive LCDs, in which a transparent electrode is used as an electrode formed on each substrate and a light source is disposed on the rear or side of the LC panel, can provide bright display even in a dark environment, by controlling the transmission amount of light from the light source through the LC panel. Transmissive LCDs, however, have disadvantages in that power consumption is relatively high due to the light source which must continually illuminate, and that sufficient contrast cannot be ensured when the display is used in a bright environment, such as outdoors under daylight.

In reflective LCDs, on the other hand, external light such as sunlight and room light is used as a light source, and such an ambient light entering the LCD panel is reflected by a reflective electrode formed on the substrate provided on the non-viewing surface side. Thus, light enters through the liquid crystal layer, is reflected by the reflective electrode, and then exits from the LCD panel. By controlling the amount of light radiating from the LCD panel for each pixel, reflective LCDs display an image. While reflective LCDs, which use external light as a light source, differ from LCDs in that their display is dark or black when no such external light is available, they have advantages that power consumption is very low because the power required for the light source can be eliminated and that sufficient contrast can be obtained in the bright environment such as outdoors.

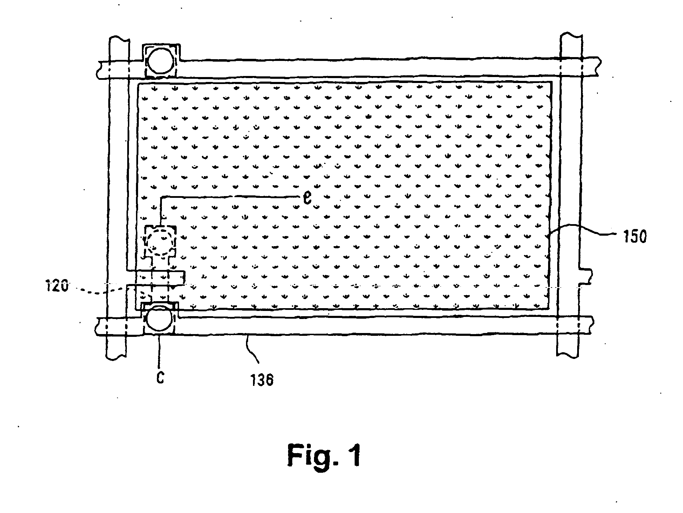

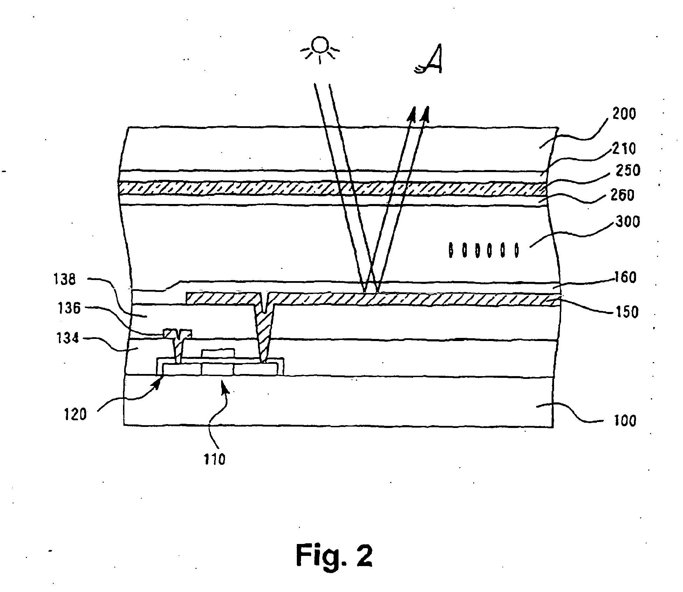

Fig. 1 is a plan view showing one pixel portion of a conventional active matrix reflective LCD in which a thin film transistor (TFT) is provided for each pixel. Fig. 2 schematically shows a cross sectional configuration of the reflective LCD taken along line C-C of Fig. 1.

The reflective LCD comprises a first substrate 100 and a second substrate 200 which are adhered to each other with a predetermined gap therebetween and a liquid crystal layer 300 sealed between the first and second substrates. A glass or plastic substrate is used for the first and second substrate 100 and 200, while a transparent substrate is used as the second substrate 200 located on the viewer side, at least in this example.

On the side facing the liquid crystal layer of the first substrate 100, a thin film transistor (TFT) 110 is formed for each pixel. In this TFT 110, for example, a drain region in an active layer 120 is connected with a data line 136 which supplies a data signal to each pixel via a contact hole formed in an inter-layer insulating film 134. A source region of the TFT 110 is connected with a first electrode (pixel electrode) 150 which is individually formed for each pixel via a contact hole formed to penetrate the inter-layer insulating film 134 and a planarization insulating film 138.

A material having a reflective function, such as Al, Ag, or the like, is employed as the first electrode 150. On the reflective electrode 150, an alignment film 160 is formed so as to control the initial alignment of the liquid crystal layer 300.

When the LCD is a color LCD, on the side facing the liquid crystal layer of the second substrate 200, which is disposed so as to oppose to the first substrate 100, a color filter (R, G, B) 210 is formed, and a transparent electrode 250 comprising a transparent conductive material such as ITO (Indium Tin Oxide) is formed on the color filter 210. Further, on the transparent electrode 250, an alignment film 260 which is similar to the alignment film 160 on the first substrate side is formed.

In the reflective LCD configured as described above, the amount of light which enters the liquid crystal panel, is reflected by the reflective electrode 150, and radiates from the liquid crystal panel, is controlled for each pixel, to thereby produce a desired display.

In LCDs, not limited to the reflective LCD, the liquid crystal is driven by an alternating voltage so as to prevent image persistence. With regard to transmissive LCDs, as both the first electrode on the first substrate and the second electrode on the second substrate should be transparent, ITO is used as a material for both electrodes . Consequently, for AC driving of the liquid crystal, each of the first and second electrodes can apply a positive or negative voltage on substantially the same conditions.

However, in the reflective LCD as shown in Fig. 2, in which a reflective electrode formed by a metal material is used as the first electrode 150 and a transparent electrode formed by a transparent metal oxidation material such as ITO is used as the second electrode 250, certain problems such as display flicker and image persistence in the liquid crystal layer may occur depending on the drive conditions. These problems are noticeable when the liquid crystal is driven at a frequency less than the critical flicker frequency (CFF), for example, which has been reported recently. In order to further reduce power consumption of LCDs, attempts have been made to reduce the frequency for driving the liquid crystal (≒ the frequency for writing data to liquid crystal (liquid crystal capacitor) at each pixel formed in the region where the first and second electrodes face each other) equal or less than the CFF at which image flicker can be recognized by a human eye, approximately 40Hz ~ 30Hz, by reducing such a drive frequency to less than 60Hz which is a reference frequency in the NTSC standard, for example. It has been revealed, however, that when each pixel of a conventional reflective liquid crystal panel is driven at less than the CFF, the above-described problems of flicker and image persistence in the liquid crystal layer are significant, which leads to significant deterioration in display quality.

The applicant's research for the causes of such flicker and image persistence in the liquid crystal layer generated in a reflective LCD as shown in Figs. 1 and 2 revealed that asymmetricity of the electrical characteristics of the first and second electrodes relative to the liquid crystal layer 300 is one cause. It is believed that such asymmetricity results from a significant difference between a work function of 4.7eV ~ 5.2eV for the transparent metal oxide such as ITO used in the second electrode 250 and a work function of 4.2eV ~ 4.3eV for the metal such as Al used in the first electrode 150. Such a difference in the work function would cause there to be a difference of a charge actually induced on the liquid crystal interface via the alignment films 160 and 260, when the same voltage is applied to each electrode. Such a difference of charge induced on the interface between the liquid crystal and the alignment layer at each electrode side would then cause impurity ions or the like to be unevenly located toward only one electrode within the liquid crystal layer, which results in accumulation of remaining DC voltage in the liquid crystal layer 300. As the liquid crystal drive frequency is lowered, the influence of this remaining DC voltage on the liquid crystal increases and generation of flicker and image persistence in the liquid crystal layer becomes more significant. Accordingly, driving the liquid crystal at a frequency not greater than the CFF, in particular, is substantially difficult.

Reflective LCDs in which ITO is used for both the first and second electrodes as in transmissive LCDs and a reflector is separately provided on the outer side of the first electrode (on the side of the first electrode not facing the liquid crystal) are conventionally known. When a reflector is thus provided on the outer side of the fist substrate, however, the length of a light path is increased by an amount corresponding to the thickness of the transparent first electrode 150 and of the transparent first substrate, thereby making the display quality likely to deteriorate due to parallax. Consequently, in reflective LCDs which demand high display quality, a reflective electrode is employed as a pixel electrode, and it is therefore impossible to reduce the drive frequency so as to achieve lower power consumption, because flicker or the like is generated at the lower drive frequency, as described above.

In recent years, transflective LCDs having both a reflective functionality and a transmissive functionality are proposed and have attracted attention as display devices that are viewable both under bright light, such as outdoors on a sunny day, and under dark conditions. In transflective LCDs, a transparent electrode such as one made of ITO is utilized, similar as in a transmissive LCD, for realizing the transmissive functionality and a reflective electrode having a superior reflective characteristic, such as one made of Al, is used for realizing reflective functionality. Because the demand for reducing power consumption of transflective LCDs is as great as that for other types of LCDs, it is necessary for transflective LCDs to be capable of superior display quality, even when they are driven at a frequency lower than the CFF.

Currently known transflective LCDs are created by first layering a transparent electrode similar to that found in transmissive LCDs, and then layering a reflective electrode on a partial region on the transparent electrode. With such an order of layering, manufacturing a transflective LCD can be accomplished merely by adding a process for forming a reflective electrode after formation of a transparent electrode using a method for manufacturing a transmissive LCD. In a case of an active matrix device, the connection between the switching element and the transparent electrode can be realized through processes similar to those in the transmissive LCDs and the reflective electrode formed on the transparent electrode is electrically connected to the transparent electrode. Therefore, it is possible to form, in each pixel, a pixel electrode having a reflective functionality and a transmissive functionality wherein the transparent electrode and the reflective electrode partially covering the transparent electrode are electrically integrated, through processes similar to those for transmissive LCDs.

With such an order of layering for the electrodes, the reflective electrode in the reflective region on the first substrate side is placed on a side facing the liquid crystal layer. This configuration, however, suffers from a problem in that, because of the difference in the work functions between the reflective electrode on the first substrate side and the transparent second electrode on the second substrate side, flicker or the like may occur due to the asymmetry of the AC driving of liquid crystal, similar as in the reflective LCDs described earlier.

In particular, in a transflective LCD, each pixel contains a region wherein the reflective electrode is formed on a side facing the liquid crystal layer and a region wherein the reflective electrode is not formed. As the generation processes for flicker and for image persistence in the liquid crystal layer differ between the reflective region and the transmissive region, there is a possibility that the occurrence of defects may become more noticeable such as, for example, image persistence occurring only in.a portion of the liquid crystal layer. In addition, when the reflective mode is switched to or from the transmissive mode, the display quality may change dramatically. Such rapid changes and locational variations in display quality are not desirable in a display device.

US 2001/0052948 describes a liquid crystal display in which the reflection film is formed over an electrode.

US 5764324 describes a reflective liquid crystal cell in which an electrode is formed on a reflecting layer and that is disposed between the reflecting layer and a liquid crystal medium.

US 2001/0020991 describes a liquid crystal device having a reflection electrode.

Moreover, when a reflective and transmissive modes are realized in a single panel, any difference in the optical characteristics of the reflective region and the transmissive region must also be considered. At present, however, adjustments in consideration of these differences are not optimized and efficient means for performing these adjustments are desired.

### SUMMARY OF THE INVENTION

The present invention was conceived to solve the above problem and an advantage of the present invention is that the electrical characteristics of the first and second electrodes for applying a drive voltage to the liquid crystal layer are matched in a transflective liquid crystal display apparatus so as to realize a liquid crystal display apparatus with a reflective functionality and a transmissive functionality and having a lower occurrence of flicker, a lower influence of parallax, a high display quality, and a low power consumption.

In order to achieve at least the advantage described above. According to one aspect of the present invention, there is provided a liquid crystal display apparatus having a liquid crystal layer sealed between a first substrate having a first electrode and a second substrate having a second electrode , wherein: the first electrode is patterned to form a plurality of pixels; each of the pixels comprising a switching element formed on the first substrate; a reflective layer is formed on the first substrate only in a subregion within each of the pixels, for reflecting light transmitted and incident through the second substrate and the second electrode to the liquid crystal layer; the twist angle of the liquid crystal layer is set to 60° or greater; in each pixel region, the difference between a first gap (dr) which is defined as a distance between the first electrode and the second electrode in the reflective region and a second gap (dt) which is defined as a distance between the first electrode and the second electrode in the transmissive region is of the order of the thickness of the reflective layer; and in each pixel, the first electrode is electrically connected to the switching element; wherein, the first electrode, which is made of a transparent conductive material, is formed by sputtering, covers a transmissive region within each pixel region and extends over the reflective layer in a reflective region within each pixel region thereby covering and being in direct contact with the reflective layer, wherein the reflective layer is insulated from the switching element due to the presence of an oxide film on the surface of the reflective layer which is the result of the oxidation of this surface.

As described, in a transflective liquid crystal display apparatus wherein a reflective region and a transmissive region are formed within a pixel region, a first electrode made of a transparent conductive material is provided on the first substrate side on a side facing the liquid crystal layer, both in the reflective region wherein a reflective layer is formed and in the transmissive region and a reflective layer is formed below the first electrode only in the reflective region. In this manner, by employing a configuration wherein the first electrode made of the transparent conductive material is provided on a side facing the liquid crystal layer both in the reflective region and in the transmissive region, it is possible to easily use, as the transparent conductive material for the first electrode, a material having a work function similar to, for example, a transparent conductive material used for the second electrode. With such a structure, it is possible to more symmetrically drive the liquid crystal layer using the first and second electrodes. In particular, it is possible to achieve a high quality display without generation of flicker or the like, even when the drive frequency of the liquid crystal layer in each pixel is set at a frequency lower than, for example, 60 Hz.

In addition, with a sufficiently large twist angle of 60° or greater, cell gaps in the reflective region and in the transmissive region which yield an optimum reflectance or an optimum transmittance with respect to the twist angle are almost equal to each other. Therefore, by approximately equating the gaps dr and dt in a structure having a twist angle of 60° or greater as described above, it is possible to achieve the maximum reflectance and the maximum transmittance in the reflective region and in the transmissive region, respectively.

According to another aspect of the present invention, there is provided a liquid crystal display apparatus having a liquid crystal layer sealed between a first substrate having a first electrode and a second substrate having a second electrode, wherein a reflective layer is formed on the first substrate only in a subregion within a pixel region, for reflecting light transmitted and incident through the second substrate and the second electrode to the liquid crystal layer; a twist angle which is a difference between the alignment direction of liquid crystal at the side of the first electrode and the alignment direction of liquid crystal at the side of the second electrode is set to 80° or less; a gap adjustment layer is formed below the reflective layer formed in the reflective region; and in a pixel region, a difference between a first gap (dr) which is defined as a distance between the first electrode and the second electrode in the reflective region and a second gap (dt) which is defined as a distance between the first electrode and the second electrode in the transmissive region is greater than the thickness of the reflective layer wherein the first gap (dr) in the reflective region is smaller than the second gap (dt) in the transmission region; wherein, the first electrode, which is made of transparent conductive material, is formed by sputtering, covers a transmissive region within a pixel region and extends over the reflective layer in a reflective region within the pixel region thereby covering and being in direct contact with the reflective layer wherein the reflective layer is insulated from the first electrode due to the presence of an oxide film on the surface of the reflective layer which is the result of the oxidation of this surface;

When a liquid crystal layer having a twist angle of 80° or less is employed, cell gaps for achieving an optimum reflectance or an optimum transmittance with respect to the twist angle of the liquid crystal differ in the reflective region and in the transmissive region. Therefore, by setting the difference between the gap dr and the gap dt to a suitable value at least greater than the thickness of the reflective layer, it is possible to achieve the maximum reflectance and the maximum transmittance respectively in the reflective region and in the transmissive region. For example, when the twist angle is approximately 0°, the gap dr is chosen to be 0.4 - 0.6 times the gap dt.

According to another aspect of the present invention, it is preferable that, in the liquid crystal display apparatus, a difference between the work function of the transparent conductive material for the first electrode and the work function of a transparent conductive material for the second electrode formed on the second substrate side on a side facing the liquid crystal layer is set to 0.5 eV or less. With such a structure, it is possible to more symmetrically drive the liquid crystal by the first electrode and the second electrode.

According to another aspect of the present invention, it is preferable that, in the liquid crystal display apparatus, a switching element is formed for each pixel over the first substrate; the reflective layer is formed on an insulating film which covers the switching element, the reflective layer being insulated from the switching element; and a connecting metal layer is formed within a contact hole formed in the insulating film covering the switching element, and the switching element and the first electrode are electrically connected through the connecting metal layer.

In this manner, by interposing a connecting metal layer between the switching element such as a thin film transistor and the first electrode in a configuration wherein a first electrode is provided on a side facing the liquid crystal layer, it is possible to prevent degradation of an electrode and an active layer of the switching element when the reflective layer formed below the first electrode is patterned, and thus it is possible to reliably connect the first electrode formed above the reflective layer to the switching element.

### BRIEF DESCRIPTION OF THE DRAWINGS

Fig. 1 is a diagram showing a planer structure of a portion of a first substrate side in a conventional active matrix reflective LCD.
Fig. 2 is a diagram schematically showing a cross sectional structure of a conventional reflective LCD along the line C-C in Fig. 1.
Fig. 3 is a diagram schematically showing a planer structure of the first substrate side in an active matrix transflective LCD according to a preferred embodiment of the present invention.
Fig. 4A is a diagram schematically showing a cross sectional structure of the first substrate side along the line A-A of Fig. 3.
Fig. 4B is a diagram schematically showing a cross sectional structure of the transflective LCD along the line B-B of Fig. 3.
Fig. 4C is a diagram showing an example structure of a source electrode 40 and a connecting metal layer 42 of Fig. 4A.
Fig. 5 is a diagram showing dependencies of transmittance and reflectance on the twist angle of liquid crystal in the transmissive region and in the reflective region.
Fig. 6 is a diagram showing dependencies of optimum Δnd on the twist angle of liquid crystal in the transmissive region and in the reflective region.
Fig. 7A is a diagram schematically showing a cross sectional structure of an additional example structure, different from Fig. 4A, of the first substrate side along the line A-A of Fig. 3.
Fig. 7B is a diagram schematically showing a cross sectional structure of an additional transflective LCD, different from Fig. 4B, along the line B-B of Fig. 3.

### DESCRIPTION OF PREFERRED EMBODIMENT

A preferred embodiment of the present invention (hereinafter referred to simply as "the embodiment") will now be described with reference to the drawings.

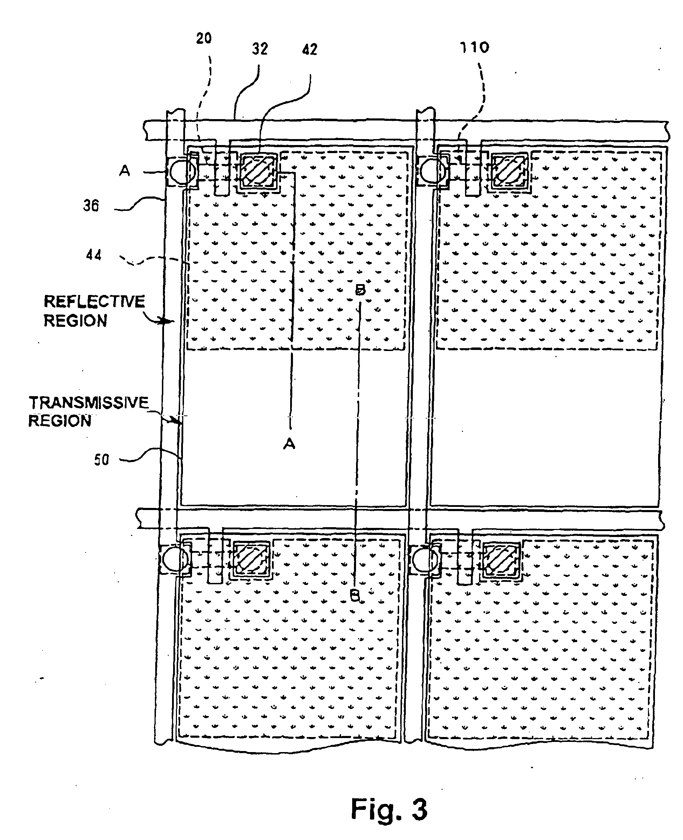

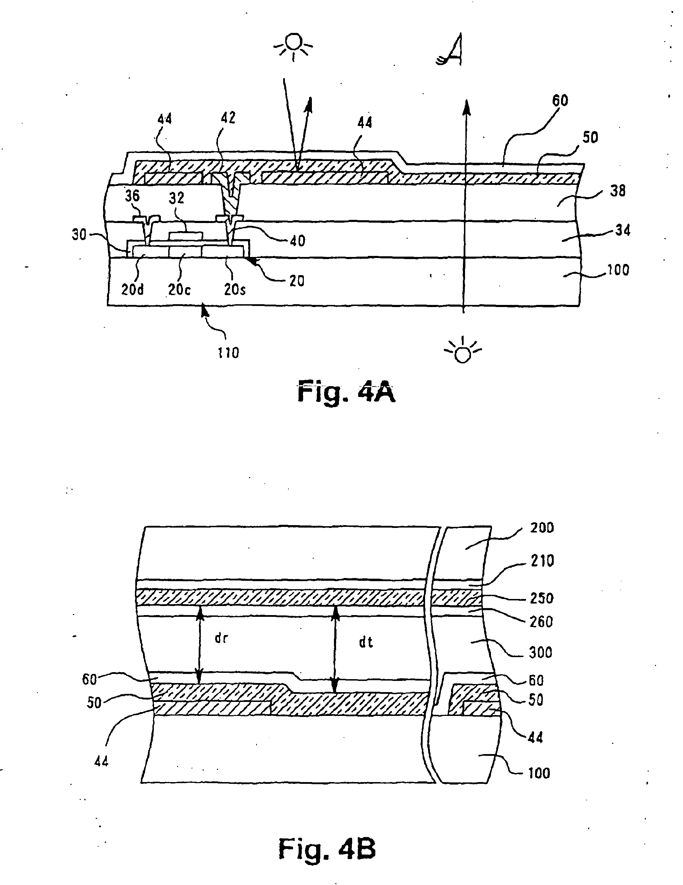

Fig. 3 shows a portion of a planer structure of a first substrate side in a case where a transflective active matrix LCD is employed as a transflective LCD according to the embodiment. Fig. 4A schematically shows a cross sectional structure around a TFT in a pixel along the line A-A of Fig. 3 and Fig. 4B schematically shows an overall cross sectional structure of the LCD along the line B-B of Fig. 3. In an active matrix LCD, a plurality of pixels are provided in a matrix form within a display region and a switching element such as a TFT is provided corresponding to each pixel. The switching element is formed for each pixel on one of a first substrate side and a second substrate side, for example, in the illustrated structure, on the side of the first substrate 100. A pixel electrode (first electrode) 50 which is formed in an individual pattern is connected to the switching element.

For the first substrate 100 and the second substrate 200, a transparent substrate such as glass is used. Similar to the conventional art, on the side of the second substrate 200 opposing the first substrate, a color filter 210 is formed for a color type structure and a second electrode 250 which is made of a transparent conductive material is formed on the color filter 210. As a transparent conductive material for the second electrode 250, IZO (Indium Zinc Oxide) or ITO is used. In an active matrix device, the second electrode 250 is formed as a common electrode for all pixels. An alignment film 260 made of polyimide or the like is formed on the second electrode 250.

In the embodiment, a structure of electrodes is employed such that the electrical characteristics, with respect to a liquid crystal layer 300, of the first substrate side is matched with those of the second substrate side. Specifically, instead of a reflective metal electrode, a first electrode 50 made of a transparent conductive material having a similar work function as the second electrode 250, that is, a material similar to the second electrode 250, such as IZO or ITO is formed and layered immediately below an alignment film over the first substrate to cover almost the entire region of a pixel region. In addition, in the embodiment, as shown in the Fig. 3, in order to realize transflective properties, a reflective region wherein light incident from the side of the second substrate 200 is reflected to the liquid crystal layer 300 and a transmissive region wherein light generated by a backlight or the like is transmitted from the first substrate 100 side towards the second substrate side are formed within a pixel region. Among these regions, in the reflective region, a reflective layer 44 which is directly covered by the first electrode 50 and for reflecting the incident light from the second substrate side is formed. In the transmissive region, the reflective layer 44 is opened and is not present, and the first electrode 50 is formed directly over a planarization insulating film 38 which will be described below.

By forming the first electrode 50 of the same material as used for the second electrode 250, electrodes having the same work function sandwich the liquid crystal layer 300, via the alignment layers 60 and 260, respectively, so that the liquid crystal layer 300 can be AC driven by the first and second electrodes 50 and 250 with very good symmetry. Here, the work functions of the first and second electrodes 50 and 250 need not be completely identical and may be as approximate to each other as possible so that the liquid crystal layer 300 can be symmetrically driven. When the difference between the work functions of the both electrodes is approximately 0.5eV or less, high quality display without flicker or image persistence in the liquid crystal layer can be achieved, even when the drive frequency for the liquid crystal is set to CFF or lower, as described above.

In order to satisfy the above conditions for the electrodes, for example, IZO (whose work function is 4.7eV~ 5.2eV) can be used for the first electrode 50 and ITO (whose work function is 4.7eV ~ 5.0eV) can be used for the second electrode 250, or vice versa. The material used for each electrode may be selected in consideration of process properties such as transmissivity and patterning precision and manufacturing cost.

As the reflective layer 44, a material having a superior reflective characteristic such as Al, Ag, or an alloy of these (in the embodiment, an Al-Nd alloy) is used at least on the front surface (the side facing the liquid crystal layer). The reflective layer 44 may be a single layer of a metal material such as Al, or, alternatively, a layer of refractory metal (high melting point metal) such as Mo may be formed as a lower buffer layer which contacts the planarization insulating film 38. By forming such lower buffer layer, the contact between the reflective layer 44 and planarization insulating film 38 can be improved, and, consequently, the reliability of the element can be enhanced.

The reflective layer 44, which is made of a conductive material such as Al, as described above, is electrically insulated from the first electrode 50 formed on the reflective layer 44 because the first electrode 50 is formed by sputtering IZO or ITO, when these materials are used. More specifically, because the reflective layer 44 made of Al, when exposed to the sputtering atmosphere, undergoes oxidation reaction on its surface and is covered with a natural oxide film. Therefore, according to the present embodiment, rather than using this reflective layer 44 as a first electrode which drives the liquid crystal as in the convention reflective LCD, the transparent conductive layer formed on the reflective film 44 is used as the first electrode 50 for applying a voltage in accordance with the display data to the liquid crystal 300.

Next, the relationships between a twist angle of liquid crystal and the distance [cell gap] dr between the second electrode 250 and the first electrode 50 in the reflective region and the twist angle of liquid crystal and the distance [cell gap] dt between the second electrode 250 and the first electrode 50 in the transmissive region, as set in the embodiment will be explained. In the embodiment, the twist angle of the liquid crystal corresponds to a difference between a direction (rubbing angle) of an initial alignment, controlled by an alignment film 60, of the liquid crystal in the substrate surface on the side of the first substrate 100 and a direction (rubbing angle) of an initial alignment, controlled by an alignment film 260, of the liquid crystal in the substrate surface on the side of the second substrate 200.

In the LCD configuration shown in Figs. 4A and 4B, the twist angle of liquid crystal is set at 60° or greater, for example, 63°, and more preferably 70° or greater. The cell gap dr in the reflective region and the cell gap dt in the transmissive region are set to be approximately equal to each other, as shown in Fig. 4B. In reality, because the reflective layer 44 is opened in the transmissive region and the transparent first electrode 50 is formed both in the transmissive region and in the reflective region, the "approximate equal" relationship between the cell gaps dr and dt includes a difference in the order of the thickness of the reflective layer 44.

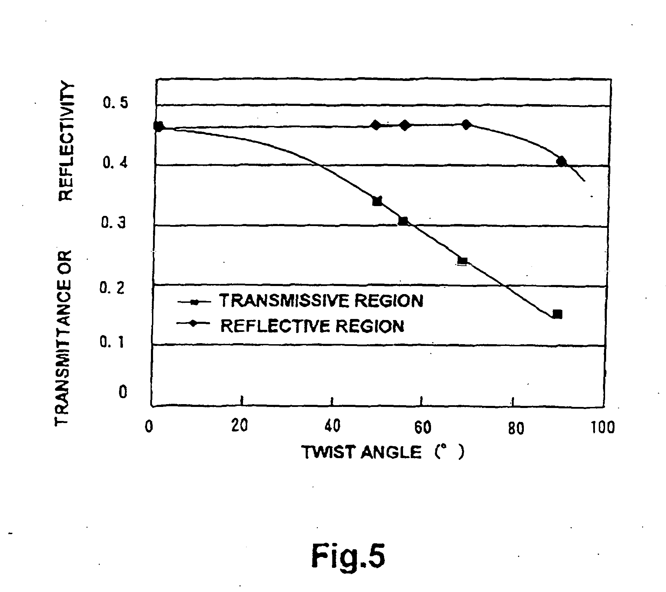

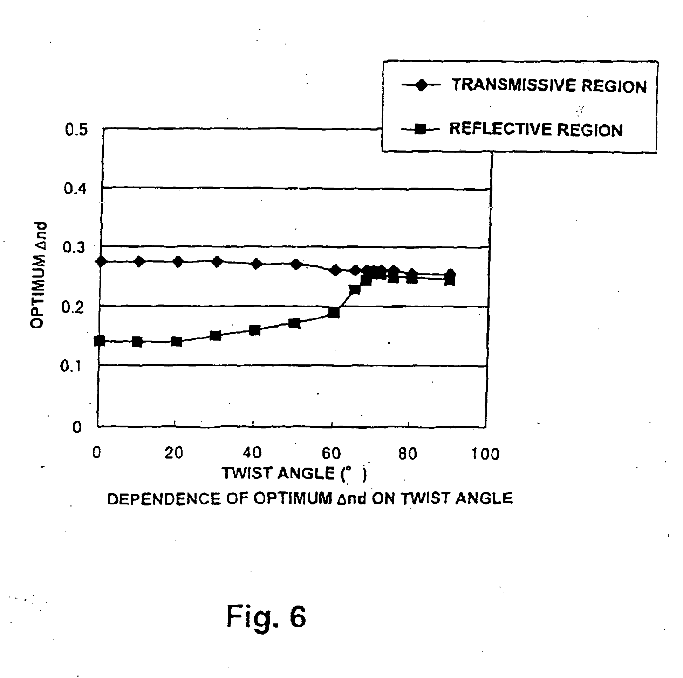

Figs. 5 and 6 show results of evaluations of characteristics of the reflective region and for the transmissive region, respectively, with respect to the twist angle of the liquid crystal in a transflective LCD, as obtained by the applicant. Fig. 5 shows dependencies, on the twist angle, of the reflectance in the reflective region and of the transmittance in the transmissive region when the same voltage is applied to the liquid crystal. As shown in Fig. 5, the reflectance in the reflective region only shows a small degree of dependence on the twist angle and sufficient reflectance can be obtained over almost the entire range of twist angles. On the other hand, it can be seen that the transmittance in the transmissive region is reduced as the twist angle is increased. Therefore, from the results of Fig. 5, it can be seen that a smaller twist angle is preferable for achieving sufficient transmittance in addition to sufficient reflectivity and that when the twist angle must be increased, the settings must be carefully reviewed so as to prevent the transmittance in the transmissive region from becoming lower than an acceptable lower limit.

Fig. 6 shows dependencies, on the twist angle, of Δnd which yield optimum reflectance and optimum transmittance (hereinafter referred to simply as "optimum Δnd"). Here, Δn denotes an anisotropy of index of refraction of liquid crystal and d denotes the cell gap [distance between the first electrode and the second electrode] . As shown in Fig. 6, when the twist angle is approximately 60°, and more preferably, 70° or greater, the optimum Δnd for the reflective region approximately coincides with the optimum Δnd for the transmissive region. It can be also seen that the change in the optimum Δnd for the transmissive region is small, but the optimum Δnd for the reflective region begins to decrease as the twist angle is reduced to a value of less than approximately 70°. The values for the gap d, etc. is not limited to the values derived from Fig. 6, but, as it can be seen from Fig. 6 that when the twist angle is approximately 60° or greater or, more preferably, approximately 70° or greater, the optimum Δnd for the cell gap dt in the transmissive region and the optimum Δnd for the cell gap dr in the reflective region are almost equal, by setting, as shown in Figs. 4A and 4B, the cell gaps dt and dr to approximate equal values corresponding to the optimum And, it is possible to simultaneously achieve maximum reflectance and maximum transmittance.

On the other hand, when the twist angle is less than approximately 80°, more specifically, less than approximately 70°, the optimum Δnd for the transmissive region changes by a small amount, from approximately 0.26 to 0.275, whereas the optimum Δnd for the reflective region is significantly reduced from 0.255 at a twist angle of 70° to 0.14 at a twist angle of 0°.

Because the structure is of a transflective type, the parameter related to the liquid crystal, that is, Δn, is identical in the reflective region and in the transmissive region. When the twist angle is approximately 70° or less, the gap between the first electrode 50 and the second electrode 250 must be determined such that the cell gaps dr and dt which differ from each other are achieved in the transmissive region and in the reflective region corresponding to the respective values of the optimum And. By setting the gaps to optimum values, it is possible to achieve the maximum reflectivity and the maximum transmittance. The gap dr in the reflective region must be set to a value less than the gap dt in the transmisssive region. As an example, when Δn of the liquid crystal used in the configuration shown in Fig. 6 is 0.072 and the twist angle is 0°, the optimum gap [dt] in the transmissive region is 3.37 µm and the optimum gap [dr] in the reflective region is 1. 94 µm. More generally, when the twist angle is 0°, it can be seen that the gap dr in the reflective region should be set to be approximately 1/2 of, for example, 0.4 times - 0.6 times, the gap dt in the transmissive region. From the results shown in Fig. 5, it can be seen that the transmittance, which shows a dependence on the twist angle, can be increased in the transmissive region by reducing the twist angle. Therefore, by decreasing the twist angle and designing the cell gaps to have varied reflective and transmissive regions, it is possible to achieve a higher transmittance and a higher reflectivity.

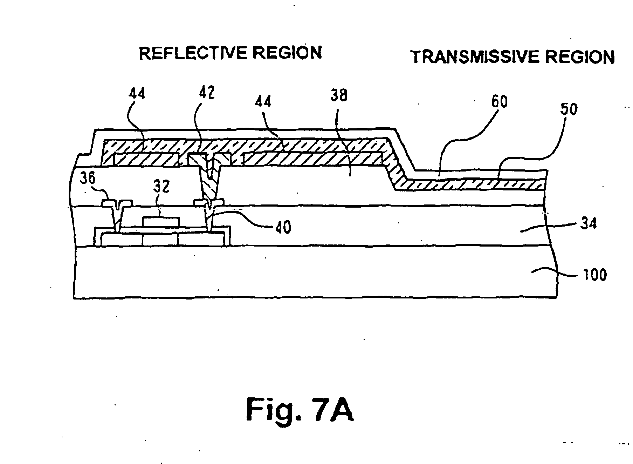

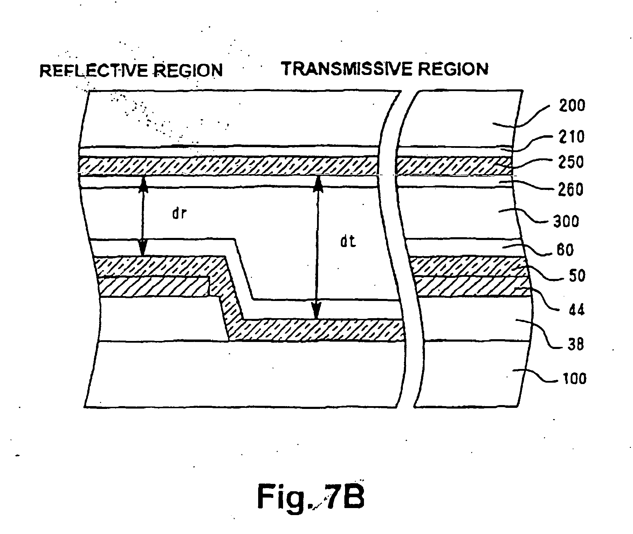

Figs. 7A and 7B show a structure commonly known as a "multi-gap structure" in which the twist angle is 80° or less and the cell gaps in the reflective region and in the transmissive region are set to suitable values. Fig. 7A schematically shows the cross sectional structure of the first substrate side along the line A-A of Fig. 3 and Fig. 7B schematically shows the cross sectional structure of the LCD along the line B-B of Fig. 3. Figs. 7A and 7B correspond respectively to Figs. 4A and 4B described above with a difference that a multi-gap structure is employed and gaps in the reflective region and in the transmissive region differ from each other.

As described, when the twist angle is 80° or less, a structure wherein the gap dr in the reflective region is smaller than the gap dt in the transmissive region is necessary. This structure is achieved by forming a gap adjustment layer having a desired thickness below the reflective layer 44. In both of the example structures shown in Figs. 7A and 7B, the planarization insulating layer 38 is also utilized as the gap adjustment layer. In Fig. 7A, the planarization insulating film 38 is formed such that it is thick in the reflective region and thin in the transmissive region corresponding to the desired values for the gaps dr and dt. In the example structure of Fig. 7B, the gaps are adjusted by removing the planarization insulating layer 38 in the transmissive region and leaving the planaization insulating layer 38 in the reflective region corresponding to the desired values for the gaps dr and dt. For example, it is possible to achieve different values for the gaps dr and dt by forming the planarization insulating layer 38 to a sufficient thickness required for the reflective region and selectively decreasing the thickness of the planarization insulating layer 38 in the transmissive region or selectively and completely removing the planarization insulating layer 38 in the transmissive region. It is also possible to form, in addition to the planarization insulating layer 38, a dedicated gap adjustment layer between the insulating layer 38 and the reflective layer 44 in just the reflective region.

Next, a structure for reliably connecting the first electrode 50 and the corresponding TFT 110 in the transflective active matrix LCD according to the embodiment and a method for manufacturing such a structure will be explained referring to Figs. 3, 4A, 4B, 7A, and 7B. For both a multi-gap structure as shown in Figs. 7A and 7B and a single gap structure as shown in Figs. 4A and 4B, the TFT 110 and the corresponding first electrode 50 can be formed through similar steps which will be described below.

In the embodiment, a top gate type TFT is employed as the TFT 110 and polycrystalline silicon (p-Si) obtained through polycrystallization of amorphous silicon (a-Si) by laser annealing is used as an active layer 20. The TFT 110 is not limited to a top gate type TFT having a p-Si active layer, and may be of a bottom gate type, may have an a-Si active layer, or both. The impurities to be doped into a source region 20s and a drain region 20d of the active layer 20 of the TFT 110 may be either n conductive type impurities or p conductive type impurities. In the example configuration of the embodiment, an n-ch type TFT 110 is employed in which n conductive type impurities such as phosphorus are doped.

The active layer 20 of the TFT 110 is covered by a gate insulating film 30, and a gate electrode 32 made of Cr or the like and which also functions as a gate line is formed on the gate insulating film 30. After the gate electrode 32 is formed, the impurities as described above are doped into the active layer 20 with the gate electrode 32 functioning as a mask so that a source region 20s and a drain region 20d are formed and a channel region 20c which is not doped with the impurities is formed. Then, an interlayer insulating film 34 is formed to entirely cover the TFT 110, contact holes are formed in the interlayer insulating film 34, and an electrode material is formed such that a source electrode 40 is connected to the source region 20s of the p-Si active layer and a drain electrode 36 is connected to the drain region 20d of the p-Si active layer 20 through respective contact holes. In the embodiment, the drain electrode 36 also functions as a data line for supplying a data signal corresponding to the display content to each TFT 110. The source electrode 40 is connected to the first electrode 50, which is a pixel electrode as will be described below.

After the source electrode 40 and the drain electrode 36 are formed, a planarization insulating layer 38 made of a resin material such as an acrylic resin is formed to entirely cover the substrate. When a multi-gap structure is employed as shown in Figs. 7A and 7B, the planarization insulating layer 38 is formed to a thickness necessary for the reflective region, and then the thickness of the planarization insulating layer 38 is reduced or the planarization insulating layer 38 is completely removed in the transmissive region through etching. Alternatively, in consideration of the transmissive region as the basis, it is possible to form the planarization insulating layer 38 entirely covering the substrate to a thickness necessary to planarize the upper surface of the substrate and to selectively form a gap adjustment layer having a necessary thickness in the reflective region. In such a case, if the gap adjustment layer is formed using a material which makes the upper surface planer similar to the material for the planarization insulating layer 38, it is possible to maintain the flatness of the reflective surface of the reflective layer 44 formed above the gap adjustment layer, but the material for the gap adjustment layer is not limited to such material and any other insulating material may be used.

After the planarization insulating layer 38 (and possibly a gap adjustment layer) is formed as described above, a contact hole is formed in the region of the planarization insulating layer 38 corresponding to the region where the source electrode 40 is formed. A connecting metal layer 42 is formed in the contact hole and the source electrode 40 and the metal layer 42 are connected. When Al or the like is used as the source electrode 40, it is possible to achieve a superior ohmic contact in the connection between the source electrode 40 and the metal layer 42 by using a metal material such as Mo for the metal layer 42. Alternatively, the source electrode 40 may be omitted, and in this case, the metal layer 42 contacts the silicon active layer 20 of the TFT 110. A metal such as Mo can establish a superior ohmic contact with such semiconductor material.

After the connecting metal layer 42 is layered and patterned, a reflective material layer, for the reflective layer, having a superior reflective characteristics such as an Al-Nd alloy or Al is layered entirely over the substrate through deposition or sputtering. The layered reflective material layer is etched and removed in regions around the source region (formation region of the metal layer 42) of the TFT 110 and in the transmissive region so that the reflective material layer does not interfere with the connection between the metal layer 42 and the first electrode 50 which will be formed later. For example, a reflective layer 44 having a pattern as shown in Fig. 3 is formed in the reflective region of each pixel. In the embodiment, the reflective layer 44 is also actively formed in the region above the channel of the TFT 110, as shown in Fig. 3, in order to prevent generation of leak currents due to light irradiating onto the TFT 110 (in particular, the channel region 20c), and to broaden the region which can reflect light (that is, the display region) to the extent possible.

In the patterning of the reflective layer 44 as described, the metal layer 42 made of Mo or the like has a sufficient thickness (for example, 0.2 µm) and a sufficient tolerance to the etching solution. Therefore, even when the reflective layer 44 over the metal layer 42 is removed by etching, the metal layer 42 is not completely removed and remains in the contact hole. In many cases, as a material similar to that for the reflective layer 44 (such as Al) is used for the source electrode 40 or the like, if the metal layer 42 is not present, the source electrode 40 may be corroded by the etching solution for the reflective layer 44 and disconnection or the like may occur. By providing the metal layer 42 as in the embodiment, it is possible to tolerate the patterning of the reflective layer 44 and a superior electrical connection with the source electrode 40 can be maintained.

After the reflective layer 44 is patterned, a transparent conductive layer is layered through sputtering to entirely cover the substrate including the reflective layer 44. The surface of the reflective layer 44 made of Al or the like as described above is covered by an insulating natural oxide film, but the surface of the refractory metal such as Mo is not oxidized even when exposed to the sputtering atmosphere. Therefore, an ohmic contact can be achieved between the metal layer 42 exposed in the contact region and the transparent conductive layer for the first electrode which is layered on the metal layer 42. The transparent conductive layer is patterned, after it is formed, independently for each pixel, and, in each pixel region, into a common shape for the reflective region and the transmissive region. In this manner, a pixel electrode (first electrode) 50 is formed. After the first electrode 50 is formed and patterned in each pixel region, an alignment film 60 made of polyimide or the like is formed to entirely cover the substrate and the first substrate side is completed. Then, the first substrate 100 and a second substrate 200 to which the elements are formed up to the alignment film 260 are affixed at peripheral sections of the substrates with a predetermined gap therebetween and liquid crystal are sealed into the space between the substrates to form a liquid crystal display apparatus.

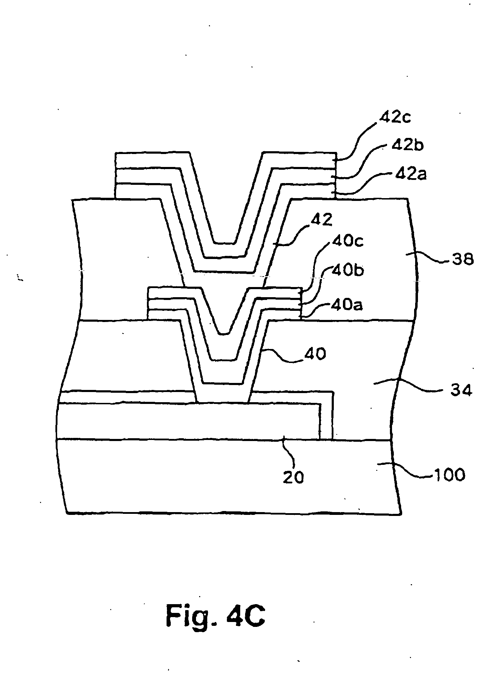

The connecting metal layer 42 for connecting the TFT 110 and the first electrode 50 can maintain a preferable connection with the source electrode 40, even when the source electrode 40 has a multi-layered structure in which an Al layer is provided between refractory metal layers such as Mo. An example of such a multi-layer structure of the source electrode 40 is shown in Fig. 4C which has a structure of Mo layer/Al layer/Mo layer layered, in that order, from the side of the active layer 20. Because a Mo layer is formed on the side of the active layer 20 made of p-Si, it is possible to prevent defect generation in the active layer caused by Si atoms moving into an Al layer. In addition, because a Mo layer is formed as the uppermost layer, even after the formation step of the contact and the formation and the etching steps of the metal layer 42, it is possible to maintain superior electrical contact between the source electrode 40 and the metal layer 42. Moreover, because Mo or the like similar to the uppermost layer of the source electrode 40 having a multi-layered structure is used for the connecting metal layer 42 in the embodiment, it is possible to achieve a superior contact between the source electrode 40 and the metal layer 42.

In addition, or alternatively, the connecting metal layer 42 may have a multi-layered structure similar to the source electrode 40 described above. As the multi-layered structure, for example, a three-layer structure of layer of a refractory metal such as Mo/conductive layer such as Al/layer of a refractory metal such as Mo or a two-layered structure of conductive layer such as Al/layer of a refractory metal such as Mo layered from the bottom to the top may be employed. When such a metal layer 42 having a multi-layered structure is employed, the source electrode 40 provided below the metal layer 42 may have a multi-layered structure as described above or a single layer structure of Al or the like. In addition, it is also possible to allow direct contact of the connecting metal layer 42 with the active layer 20. In such a case, it is also possible to employ a metal layer 42 having a three-layered structure or a two-layered structure as described above. In each case, the metal layer 42 must tolerate etching of the reflective layer 44 and stably maintain electrical connection characteristics without formation of an insulating film on the surface when the first electrode 50 is formed, and therefore it is preferable that a refractory metal layer is formed at least on the side of the surface contacting the first electrode 50.

As described, in the embodiment, in a transflective LCD, even when a reflective layer must be selectively formed on a reflective region of one of the substrate sides, it is possible to place a first electrode and a second electrode having similar characteristics in equivalent positions with respect to a liquid crystal layer. Therefore, it is possible to more symmetrically AC drive the liquid crystal. As a result, even when the driving frequency of the liquid crystal is set, for example, to a value less than the CFF, it is possible to realize a transflective LCD which can display at a high quality and wherein no flicker nor image persistence occurs. In addition, by adjusting the cell gaps in the reflective region and in the transmissive region corresponding to the twist angle of the liquid crystal layer, it is possible to achieve an optimum reflectance and an optimum transmittance respectively in the reflective region and in the transmissive region.

## Claims

1. A liquid crystal display apparatus having a liquid crystal layer (300) sealed between a first substrate (100) having a first electrode (50) and a second substrate (200) having a second electrode (250), wherein:
the first electrode is patterned to form a plurality of pixels each of the pixels comprising a switching element (110) formed on the first substrate (100);
a reflective layer (44) is formed on the first substrate only in a subregion within each of the pixels, for reflecting light transmitted and incident through the second substrate (200) and the second electrode (250) to the liquid crystal layer (300) thereby defining a reflective region and a transmissive region;
the twist angle of the liquid crystal layer (300) is set to 60° or greater;
in each pixel, the difference between a first gap (dr) which is defined as a distance between the first electrode (50) and the second electrode (250) in the reflective region and a second gap (dt) which is defined as a distance between the first electrode (50) and the second electrode (250) in the transmissive region is of the order of the thickness of the reflective layer (44); and
in each pixel, the first electrode is electrically connected to the switching element (110);
**characterized in that**,
the first electrode (50), which is made of a transparent conductive material, is formed by sputtering, covers a transmissive region within each pixel and extends over the reflective layer in a reflective region within each pixel thereby covering and being in direct contact with the reflective layer, wherein the reflective layer (44) is insulated from the switching element (110) because the surface of the reflective layer is oxidized.

2. A liquid crystal display apparatus according to claim 1, wherein
a difference between a work function of the transparent conductive material for the first electrode (50) and a work function of a transparent conductive material for the second electrode (250) formed on the second substrate side over a surface facing the liquid crystal layer is 0.5 eV or less.

3. A liquid crystal display apparatus having a liquid crystal layer (300) sealed between a first substrate (100) having a first electrode (50) and a second substrate (200) having a second electrode (250), wherein
a reflective layer (44) is formed on the first substrate only in a subregion within a pixel, for reflecting light transmitted and incident through the second substrate and the second electrode to the liquid crystal layer thereby defining a reflective and a transmissive region;
a twist angle which is a difference between the alignment direction of liquid crystal at the side of the first electrode (50) and the alignment direction of liquid crystal at the side of the second electrode (250) is set to 80° or less;
in the pixel, a difference between a first gap (dr) which is defined as a distance between the first electrode (50) and the second electrode (250) in the reflective region within the pixel and a second gap (dt) which is defined as a distance between the first electrode (50) and the second electrode (250) in the transmissive region within the pixel is greater than the thickness of the reflective layer (44) wherein the first gap (dr) in the reflective region is smaller than the second gap (dt) in the transmission region;
a gap adjustment layer is formed below the reflective layer (44) formed in the reflective region;
**characterized in that**, the first electrode (50), which is made of transparent conductive material, is formed by sputtering, covers the transmissive region within the pixel and extends over the reflective layer (44) in the reflective region within the pixel thereby covering and being in direct contact with the reflective layer (44) wherein the reflective layer (44) is insulated from the first electrode (50) because the surface of the reflective layer (44) is oxidized.

4. A liquid crystal display apparatus according to claim 3, wherein
the twist angle is approximately 0°, and the first gap (dr) is approximately 0.4 times - 0.6 times the second gap (dt) .

5. A liquid crystal display apparatus according to any one of claims 3 to 4, wherein
a difference between a work function of the transparent conductive material for the first electrode (50) and a work function of a transparent conductive material for the second electrode (250) formed on the second substrate side over a surface facing the liquid crystal layer is 0.5 eV or less.

6. A liquid crystal display apparatus according to any one of claims 3 to 5, wherein
a switching element (110) is formed for each pixel over the first substrate (100).

7. A liquid crystal display apparatus according to any one of claims 1, 2 or 6, wherein the reflective layer (44) is placed on an insulating film (38) which covers the switching element (110), the reflective layer being insulated from the switching element (110); and
a connecting metal layer (40, 42) is formed within a contact hole formed in the insulating film (38) covering the switching element (110) and the switching element (110) and the first electrode (50) are electrically connected through the connecting metal layer (40, 42).

8. A liquid crystal display apparatus according to any preceding claim, wherein either indium tin oxide or indium zinc oxide are used for the first electrode (50) and second electrode (250).

9. A method of driving the liquid crystal display apparatus according to any preceding claim, wherein the driving frequency of the liquid crystal layer for each pixel is 60 Hz or less.

## Patentansprüche

1. Flüssigkristall-Anzeigevorrichtung mit einer Flüssigkristallschicht (300), welche zwischen einem ersten Substrat (100) mit einer ersten Elektrode (50) und einem zweiten Substrat (200) mit einer zweiten Elektrode (250) abdichtend angeordnet ist, wobei:
die erste'Elektrode derart bemustert ist, dass sie eine Vielzahl von Bildelementen oder Pixeln bildet, wobei jedes Pixel ein Schaltelement (110) aufweist, welches auf dem ersten Substrat (100) ausgebildet ist;
eine Reflexionsschicht (44) auf dem ersten Substrat nur in einem Unterbereich innerhalb eines jeden Pixels ausgebildet ist, um Licht, welches durch das zweite Substrat (200) und die zweite Elektrode (250) an die Flüssigkristallschicht (300) übertragen wird und durch das zweite Substrat und die zweite Elektrode einfällt, zu reflektieren, wodurch ein Reflexions- und ein Übertragungsbereich definiert werden;
der Verdrehwinkel der Flüssigkristallschicht (300) bei 60° oder größer festgelegt ist;
in jedem Pixel die Differenz zwischen einer ersten Lücke (dr), welche als Abstand zwischen der ersten Elektrode (50) und der zweiten Elektrode (250) in dem Reflexionsbereich definiert ist, und einer zweiten Lücke (dt), welche als Abstand zwischen der ersten Elektrode (50) und der zweiten Elektrode (250) in dem Übertragungsbereich definiert ist, in der Größenordnung der Dicke der Reflexionsschicht (44) liegt; und
in jedem Pixel die erste Elektrode elektrisch mit dem Schaltelement (110) verbunden ist;
**dadurch gekennzeichnet, dass**
die erste Elektrode (50), welche aus einem transparenten leitfähigen Werkstoff hergestellt ist und durch Sputtern gebildet wird, einen Übertragungsbereich in jedem Pixel bedeckt und sich über die Reflexionsschicht in einem Reflexionsbereich in jedem Pixel erstreckt, wodurch sie die Reflexionsschicht bedeckt und in direktem Kontakt mit dieser ist, wobei die Reflexionsschicht (44) von dem Schaltelement (110) isoliert ist, da die Oberfläche der Reflexionsschicht oxidiert ist.

2. Flüssigkristall-Anzeigevorrichtung nach Anspruch 1, wobei eine Differenz zwischen einer Austrittsarbeit des transparenten leitfähigen Werkstoffs für die erste Elektrode (50) und einer Austrittsarbeit eines transparenten leitfähigen Werkstoffs für die zweite Elektrode (250), welche auf der zweiten Substratseite über einer der Flüssigkristallschicht gegenüberliegenden Oberfläche ausgebildet ist, 0,5 eV oder weniger beträgt.

3. Flüssigkristall-Anzeigevorrichtung mit einer Flüssigkristallschicht (300), welche zwischen einem ersten Substrat (100) mit einer ersten Elektrode (50) und einem zweiten Substrat (200) mit einer zweiten Elektrode (250) abdichtend angeordnet ist, wobei
eine Reflexionsschicht (44) auf dem ersten Substrat nur in einem Unterbereich innerhalb eines Pixels ausgebildet ist, um Licht, welches durch das zweite Substrat und die zweite Elektrode an die Flüssigkristallschicht übertragen wird und durch diese einfällt, zu reflektieren, wodurch ein Reflexions- und ein Übertragungsbereich definiert werden;
ein Verdrehwinkel, bei welchem es sich um eine Differenz zwischen der Ausrichtung von Flüssigkristall auf der Seite der ersten Elektrode (50) und der Ausrichtung von Flüssigkristall auf der Seite der zweiten Elektrode (250) handelt, bei 80° oder weniger festgelegt ist;
in dem Pixel eine Differenz zwischen einer ersten Lücke (dr), welche als Abstand zwischen der ersten Elektrode (50) und der zweiten Elektrode (250) in dem Reflexionsbereich innerhalb des Pixels definiert ist, und einer zweiten Lücke (dt), welche als Abstand zwischen der ersten Elektrode (50) und der zweiten Elektrode (250) in einem Übertragungsbereich innerhalb des Pixels definiert ist, größer als die Dicke der Reflexionsschicht (44) ist, wobei die erste Lücke (dr) in dem Reflexionsbereich kleiner als die zweite Lücke (dt) in dem Übertragungsbereich ist;
eine Lückenanpassungsschicht unter der in dem Reflexionsbereich ausgebildeten Reflexionsschicht (44) ausgebildet wird;
**dadurch gekennzeichnet, dass** die erste Elektrode (50), welche aus einem transparenten leitfähigen Werkstoff hergestellt ist und durch Sputtern gebildet wird, den Übertragungsbereich in dem Pixel bedeckt und sich über die Reflexionsschicht (44) in dem Reflexionsbereich in dem Pixel erstreckt, wodurch sie die Reflexionsschicht (44) bedeckt und in direktem Kontakt mit dieser ist, wobei die Reflexionsschicht (44) von der ersten Elektrode (50) isoliert ist, da die Oberfläche der Reflexionsschicht (44) oxidiert ist.

4. Flüssigkristall-Anzeigevorrichtung nach Anspruch 3, **dadurch gekennzeichnet, dass**
der Verdrehwinkel ungefähr 0° beträgt und die erste Lücke (dr) ungefähr das 0,4- bis 0,6-fache der zweiten Lücke (dt) beträgt.

5. Flüssigkristall-Anzeigevorrichtung nach einem der Ansprüche 3 und 4, **dadurch gekennzeichnet, dass**
eine Differenz zwischen einer Austrittsarbeit des transparenten leitfähigen Werkstoffs für die erste Elektrode (50) und einer Austrittsarbeit eines transparenten leitfähigen Werkstoffs für die zweite Elektrode (250), welche auf der zweiten Substratseite über einer der Flüssigkristallschicht gegenüberliegenden Oberfläche ausgebildet ist, 0,5 eV oder weniger beträgt.

6. Flüssigkristall-Anzeigevorrichtung nach einem der Ansprüche 3 bis 5, **dadurch gekennzeichnet, dass**
ein Schaltelement (110) für jedes Pixel über dem ersten Substrat (100) ausgebildet ist.

7. Flüssigkristall-Anzeigevorrichtung nach einem der Ansprüche 1, 2 oder 6, **dadurch gekennzeichnet, dass**
die Reflexionsschicht (44) auf einem Isolierfilm (38) angeordnet ist, welcher das Schaltelement (110) bedeckt, wobei die Reflexionsschicht von dem Schaltelement (110) isoliert ist; und
eine Verbindungs-Metallschicht (40, 42) in einem in dem das Schaltelement (110) bedeckenden Isolierfilm (39) ausgebildeten Kontaktloch ausgebildet ist, und das Schaltelement (110) und die erste Elektrode (50) durch die Verbindungs-Metallschicht (40, 42) elektrisch miteinander verbunden sind.

8. Flüssigkristall-Anzeigevorrichtung nach einem der vorhergehenden Ansprüche, **dadurch gekennzeichnet, dass** entweder Indiumzinnoxid oder Indiumzinkoxid für die erste Elektrode (50) und die zweite Elektrode (250) verwendet werden.

9. Verfahren zum Betreiben oder zum Steuern der Flüssigkristall-Anzeigevorrichtung nach einem der vorhergehenden Ansprüche, **dadurch gekennzeichnet, dass** die Antriebs- oder Steuerfrequenz der Flüssigkristallschicht für jedes Pixel 60 Hz oder weniger beträgt.

## Revendications

1. Dispositif d'affichage à cristaux liquides comportant une couche de cristaux liquides (300) scellée entre un premier substrat (100) ayant une première électrode (50) et un second substrat (200) ayant une seconde électrode (250), dans lequel :
la première électrode est profilée pour former une pluralité de pixels, chacun des pixels comprenant un élément de commutation (110) formé sur le premier substrat (100),
une couche de réflexion (44) est formée sur le premier substrat uniquement dans une sous-région à l'intérieur de chacun des pixels, afin de réfléchir la lumière transmise et incidente à travers le second substrat (200) et la seconde électrode (250) vers la couche de cristaux liquides (300), en définissant ainsi une région de réflexion et une région de transmission,
l'angle de torsion de la couche de cristaux liquides (300) est établi à 60° ou plus,
dans chaque pixel, la différence entre un premier espacement (dr) qui est défini en tant que distance entre la première électrode (50) et la seconde électrode (250) dans la région de réflexion et un second espacement (dt) qui est défini en tant que distance entre la première électrode (50) et la seconde électrode (250) dans la région de transmission, est de l'ordre de l'épaisseur de la couche de réflexion (44) ; et
dans chaque pixel, la première électrode est électriquement connectée à l'élément de commutation (110),
**caractérisé en ce que**,
la première électrode (50) qui est constituée d'un matériau conducteur transparent, est formée par pulvérisation, recouvre une région de transmission à l'intérieur de chaque pixel et s'étend sur la couche de réflexion dans une région de réflexion à l'intérieur de chaque pixel en recouvrant ainsi et en étant en contact direct avec la couche de réflexion, la couche de réflexion (44) étant isolée de l'élément de commutation (110) du fait que la surface de la couche de réflexion est oxydée.

2. Dispositif d'affichage à cristaux liquides selon la revendication 1, dans lequel
une différence entre un travail de sortie du matériau conducteur transparent pour la première électrode (50) et un travail de sortie d'un matériau conducteur transparent pour la seconde électrode (250) formée du côté du second substrat sur une surface faisant face à la couche de cristaux liquides, est de 0,5 eV ou moins.

3. Dispositif d'affichage à cristaux liquides ayant une couche de cristaux liquides (300) scellée entre un premier substrat (100) ayant une première électrode (50) et un second substrat (200) ayant une seconde électrode (250), dans lequel
une couche de réflexion (44) est formée sur le premier substrat uniquement dans une sous-région à l'intérieur d'un pixel, afin de faire réfléchir la lumière transmise et incidente à travers le second substrat et la seconde électrode vers la couche de cristaux liquides en définissant ainsi une région de réflexion et une région de transmission,
un angle de torsion qui est une différence entre la direction d'alignement du cristal liquide du côté de la première électrode (50) et la direction d'alignement du cristal liquide du côté de la seconde électrode (250), est établie à 80° ou moins,
dans le pixel, une différence entre un premier espacement (dr) qui est défini en tant que distance entre la première électrode (50) et la seconde électrode (250) dans la région de réflexion à l'intérieur du pixel et un second espacement (dt) qui est défini en tant que distance entre la première électrode (50) et la seconde électrode (250) dans la région de transmission à l'intérieur du pixel, est supérieure à l'épaisseur de la couche de réflexion (44), où le premier espacement (dr) dans la région de réflexion est inférieur au second espacement (dt) dans la région de transmission ;
une couche d'ajustement d'espacement est formée en dessous de la couche de réflexion (44) formée dans la région de réflexion ;
**caractérisé en ce que**, la première électrode (50), qui est constituée d'un matériau conducteur transparent, est formée par pulvérisation, recouvre la région de transmission à l'intérieur du pixel et s'étend sur la couche de réflexion (44) dans la région de réflexion à l'intérieur du pixel en recouvrant ainsi et en étant en contact direct avec la couche de réflexion (44) où la couche de réflexion (44) est isolée de la première électrode (50) du fait que la surface de la couche de réflexion (44) est oxydée.

4. Dispositif d'affichage à cristaux liquides selon la revendication 3, dans lequel
l'angle de torsion est approximativement 0°, et le premier espacement (dr) est approximativement 0,4 fois à 0,6 fois le second espacement (dt).

5. Dispositif d'affichage à cristaux liquides selon l'une quelconque des revendications 3 à 4, dans lequel
une différence entre un travail de sortie du matériau conducteur transparent pour la première électrode (50) et un travail de sortie d'un matériau conducteur transparent pour la seconde électrode (250) formée du côté du second substrat sur une surface faisant face à la couche de cristaux liquides est de 0,5 eV ou moins.

6. Dispositif d'affichage à cristaux liquides selon l'une quelconque des revendications 3 à 5, dans lequel
un élément de commutation (110) est formé pour chaque pixel sur le premier substrat (100).

7. Dispositif d'affichage à cristaux liquides selon l'une quelconque des revendications 1, 2, ou 6, dans lequel la couche de réflexion (44) est placée sur un film isolant (38) qui recouvre l'élément de commutation (110), la couche de réflexion étant isolée de l'élément de commutation (110) ; et
une couche métallique de connexion (40, 42) est formée à l'intérieur d'un trou de contact formé dans le film isolant (38) recouvrant l'élément de commutation (110) et l'élément de commutation (110) et la première électrode (50) sont électriquement connectés par l'intermédiaire de la couche métallique de connexion (40, 42).

8. Dispositif d'affichage à cristaux liquides selon l'une quelconque des revendications précédentes, dans lequel soit de l'oxyde d'étain dopé à l'indium soit de l'oxyde de zinc dopé à l'indium est utilisé pour la première électrode (50) et la seconde électrode (250).

9. Procédé d'attaque du dispositif d'affichage à cristaux liquides selon l'une quelconque des revendications précédentes, dans lequel la fréquence d'attaque de la couche de cristaux liquides pour chaque pixel est de 60 Hz ou moins.
